# EUROPÄISCHE PATENTANMELDUNG

(11) **EP 0 640 459 A1**
(43) Veröffentlichungstag der Anmeldung: **01.03.1995**
(21) Anmeldenummer: 94112721.9
(22) Anmeldetag: 16.08.1994
(51) Int. Cl.: B29C 45/50

(54) **Spritzaggregat für Spritzgiessmaschinen**

(30) Priorität: 27.08.1993 DE 4328845
(71) Anmelder: Battenfeld Kunststoffmaschinen Ges.m.b.H., A-2542 Kottingbrunn (AT)
(72) Erfinder: Müssler, Richard, A-7035 Steinbrunn (AT); Bleier, Harald, A-2700 Wr. Neustadt (AT)
(74) Vertreter: Müller, Gerd, Dipl.-Ing.

(57) **Zusammenfassung**

Es wird ein Spritzaggregat 1 für Spritzmaschinen zur Verarbeitung von Thermoplasten und Duroplast-, Elastomer-und Silikonkunststoffen vorgeschlagen, bei welchem die Plastifiziereinheit 2 eine in einem Schneckenzylinder 3 angeordnete sowie für die Dosierbewegung drehantreibbare Schnecke aufweist, und bei welchem die axiale Einspritzbewegung dieser Schnecke relativ zum Schneckenzylinder 3 durch einen am hinteren Ende der Schnecke - an der Schneckenwelle 14 - angreifenden Vorschubantrieb hervorbringbar ist.

Zur Schaffung einer einfachen Bauweise für das Spritzaggregat 1 umfaßt der Dosierantrieb 16, 17 für die Schnecke bzw. Schneckenwelle 14 das Kupplungsstück einer Schneckenkupplung 15, welches sein axiales und ggfs. auch sein radiales Widerlager am Vorschubantrieb 19 hat. Dabei besteht dieser Vorschubantrieb 19 aus einer hydraulischen Kolben-Zylinder-Einheit 20, 21, 11, deren Kolbenstange 21 die Abstützung des Kupplungsstücks bildet, während der Kolben 20 diese Kolben-Zylinder-Einheit 20, 21, 11 hydrostatisch im Einspritzzylinder 11 der Vorschubeinheit 19 abgestützt ist.

## Beschreibung

Die Erfindung betrifft ein Spritzaggregat für Spritzmaschinen zur Verarbeitung von Thermoplasten und Duroplast-, Elastomer- und Silikonkunststoffen oder dergleichen
- bei welchem die Plastifiziereinheit eine in einem Schneckenzylinder angeordnete sowie für die Dosierbewegung drehantreibbare Schnecke aufweist,
- und bei welchem die axiale Einspritzbewegung dieser Schnecke relativ zum Schneckenzylinder durch einen am hinteren Ende der Schnecke angreifenden Vorschubantrieb hervorbringbar ist.

Spritzaggregate für Spritzgießmaschinen dieser Bauart sind bereits bekannt und haben bspw. eine Ausbildung, wie sie der AT-Broschüre "CD plus Battenfeld Austria" auf Seite 16 entnommen werden kann.

Hierbei ist der Drehantrieb für die Dosierbewegung der Schnecke an einem Querjoch bzw. einer Traverse montiert, wobei dieses Querjoch an seiner von der Plastifiziereinheit abgewendeten Seite den eigentlichen Antriebsmotor trägt, während es an seiner der Plastifiziereinheit zugewendeten Seite in einem Gehäuse ein Untersetzungsgetriebe, bspw. ein Planetengetriebe, enthält und darüber hinaus ein an der Schnecke der Plastifiziereinheit angreifendes Kupplungsstück lagert. In dem Gehäuse sind dabei auch axiale und/oder radiale Wälzlager für das über das Untersetzungsgetriebe drehangetriebene Kupplungsstück untergebracht.

An dem den Drehantrieb für die Dosierbewegung der Schnecke tragenden Querjoch bzw. der Traverse greift ein Vorschubantrieb oder greifen mehreren parallelachsige Vorschubantriebe für die Hervorbringung der axialen Einspritzbewegung der Schnecke relativ zum Schneckenzylinder an.

Sowohl die beim Dosiervorgang als auch die beim Einspritzvorgang auftretenden Kräfte müssen von den im Gehäuse angeordneten und über dieses am Querjoch bzw. der Traverse abgestützten, axialen und/oder radialen Wälzlager aufgenommen werden, so daß diese auch eine entsprechend robuste Auslegung aufweisen müssen. Folglich erfordert die Erstellung des gesamten Spritzaggregates einen beträchtlichen Aufwand, zumal das zum Hervorbringen der axialen Einspritzbewegung der Schnecke benötigte Antriebs-System dem Querjoch bzw. der Traverse vorgelagert ist und an einem mit einer Aufnahme zur Verankerung des Schneckenzylinders versehenen weiteren Querjoch bzw. einer Traverse sein Widerlager erhalten muß.

Die Erfindung zielt darauf ab, ein Spritzaggregat anzugeben, die das mit einem beträchtlich verminderten technischen Aufwand erstellt werden kann und dadurch nicht nur eine kompakte Bauweise erhält, sondern auch eine vereinfachte Montage ermöglicht und eine Gewichtsverminderung erreicht.

Gelöst wird diese Aufgabe bei einem Spritzaggregat der gattungsgemäßen Art erfindungsgemäß grundsätzlich dadurch,
- daß der Dosierantrieb für die Schnecke ein an dieser angreifendes Kupplungsstück umfaßt, welches sein axiales und ggfs. auch sein radiales Widerlager unmittelbar am Vorschubantrieb hat,
- daß dieser Vorschubantrieb aus einer hydraulischen Kolben-Zylinder-Einheit besteht, deren Kolbenstange die Abstützung des Kupplungsstücks bildet,
- und daß der Kolben dieser Kolben-Zylinder-Einheit hydrostatisch im Zylinder derselben abgestützt ist.

Vorteilhaft bei dieser Auslegung eines Spritzaggregates ist, daß das übliche Querjoch bzw. die Traverse, das daran abgestützte Gehäuse für die Aufnahme des Untersetzungsgetriebes sowie die darin untergebrachten axialen und/oder radialen Wälzlager in Wegfall kommen können und das Kupplungsstück zwischen der Schnecke sowie dem Dosierantrieb in einem einfachen radialen Gleitlager aufgenommen werden kann.

Zur weiteren baulichen Vereinfachung des Spritzaggregates sieht die Erfindung vor, daß der Dosierantrieb an einer von Führungsstangen getragenen, verschiebbaren Lagerplatte angeordnet ist, an der der als Kolben-Zylinder-Einheit ausgelegte Hydraulikantrieb angreift.

Die Führungsstangen für die verschiebbare Lagerplatte sind erfindungsgemäß zwischen einem sowohl den Hydraulikantrieb für die Dosierbewegung der Schnecke als auch die Düsenfahrzylinder der Plastifiziereinheit enthaltenden Antriebsblock und einer Aufnahme für den Schneckenzylinder der Plastifiziereinheit angeordnet.

Bewährt hat es sich ferner, wenn der Motor des von den der Lagerplatte getragenen Dosierantriebs über einen Zahnriemenantrieb am Kupplungsstück angreift. Möglich ist es aber auch, den Motor dieses Dosierantriebs über ein Stirnradgetriebe am Kupplungsstück angreifen zu lassen.

Nach der Erfindung kann als Motor des Dosierantriebs entweder ein Elektromotor oder aber ein Hydraulikmotor benutzt werden. Wird für den Dosierantrieb ein Elektromotor eingesetzt, dann sieht die Erfindung vor, diesem als Drehzahlregelung einen Frequenzumformer zuzuordnen.

In der Zeichnung ist ein Ausführungsbeispiel des Gegenstandes der Erfindung dargestellt. Es zeigt:
- Figur 1: in räumlicher Ansichtsdarstellung schräg von vorne und oben ein Spritzaggregat für Spritzgießmaschinen und
- Figur 2: in größerem Maßstab sowie teilweise in schematisch vereinfachter Seitenansicht und teilweise im Längsschnitt das Spritzaggregat nach Fig. 1.

Das aus der Zeichnung ersichtliche Spritzaggregat 1 für Spritzgießmaschinen, kann sowohl zur Verarbeitung von Thermoplasten als auch zur Verarbeitung von Duroplast-, Elastomer- und Silikonkunststoffen eingesetzt werden. Seine Plastifziereinheit 2 weist dabei einen Schneckenzylinder 3 auf, der bspw. von Heizbändern 4 umgeben ist und in dem sich eine für die Dosierbewegung drehantreibbare (nicht dargestellte) Schnecke befindet. Am vorderen Ende des Schneckenzylinders sitzt die Düse 5, die ebenfalls von einem Heizband 6 umgeben sein kann.

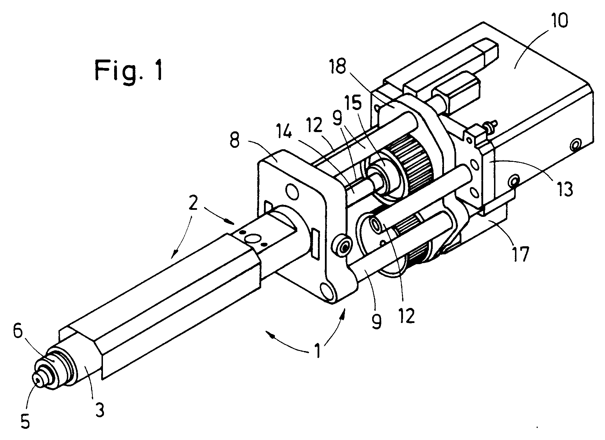

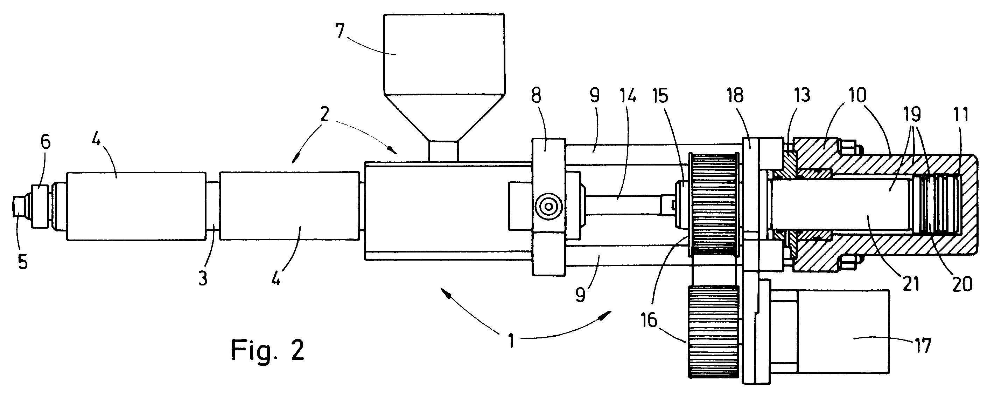

Der von der Düse entfernte Endbereich der Plastifiziereinheit 2 wird hinter dem Massetrichter 7 von einer Aufnahme 8 gehalten, die wiederum mehrere nach rückwärts gerichtete Führungsstangen 9 trägt. Beim gezeigten Ausführungsbeispiel sind bspw. drei solcher Führungsstangen 9 benutzt, von denen zwei beidseitig unten und eine mittig oben an der Aufnahme 8 fest verankert sind. Die anderen Enden der Führungsstangen 9 sind an einem Block 10 verankert, der einerseits in längsmittiger Anordnung den Einspritzzylinder 11 für die Plastifiziereinheit 2 enthält, wie das in Figur 2 zu sehen ist. Der Block 10 enthält andererseits aber auch noch zwei Düsenfahrzylinder, die zu beiden Seiten neben dem Einspritzzylinder 11 angeordnet, jedoch in der Zeichnung nicht zu sehen sind. Die Fig. 1 der Zeichnung läßt lediglich die beiden Kolbenstangen 12 erkennen, die an den in den Düsenfahrzylindern beweglichen Kolben sitzen und nach vorne aus einem Deckel 13 herausragen, welcher am Block 10 den Einspritzzylinder 11 und die beiden Düsenfahrzylinder abschließt.

Von der im Schneckenzylinder 3 sowohl drehbeweglich als auch begrenzt axial verschiebbar angeordneten Schnecke der Plastifiziereinheit ist in den Figuren 1 und 2 der Zeichnung lediglich das nach hinten freiliegende Ende der Schneckenwelle 14 zu sehen, welches sich hinter der Aufnahme 8 befindet und sich achsparallel zu den Führungsstangen 9 erstreckt. An dieser Schneckenwelle 14 greift über eine Schneckenkupplung 15 eine Antriebseinheit 16 an, die im Beispiel als Zahnriementrieb ausgelegt ist, welche aber auch als Stirnradgetriebe ausgelegt werden kann.

Diese Antriebseinheit 16 bewirkt den Drehantrieb der Schneckenwelle 14 für die Dosierbewegung der (nicht gezeigten) Schnecke und ist mit einem elektrischen Antriebsmotor 17 ausgestattet, an dem die Drehzahlregelung bspw. mit einem Frequenzumformer durchgeführt werden kann.

Antriebseinheit 16 und Antriebmotor 17 sind an einer gemeinsamen Lagerplatte 18 montiert, welche entlang den Führungsstangen 9 im Bereich zwischen der Aufnahme 8 und dem Block 10 begrenzt verschiebbar ist, damit über die Schneckenkupplung 15 und die Schneckenwelle 14 die axiale Einspritzbewegung der Schnecke innerhalb des Schneckenzylinders 3 hervorgebracht werden kann, ohne daß der Drehantrieb für die Dosierbewegung der Schnecke durch die Antriebseinheit 16 und den Antriebsmotor 17 beeinträchtigt wird.

An dieser Stelle sei erwähnt, daß der Antriebsmotor 17 der Antriebseinheit 16 für den Dosierantrieb der Schnecke nicht unbedingt ein elektrischer Antriebsmotor sein muß. Vielmehr kann es sich hier auch um einen hydraulischen Antriebsmotor handeln.

Wesentlich für das als Ausführungsbeispiel in der Zeichnung dargestellte Spritzaggregat 1 ist, daß es sich bei dem Vorschubantrieb 19 für die Einspritzbewegung der Schnecke um eine hydraulische Kolben-Zylinder-Einheit handelt, die in den Block 10 integriert ist, und dabei innerhalb des Einspritzzylinders 11 den axialverschiebbaren Kolben 20 aufweist, der mit seiner Kolbenstange 21 den Deckel 13 des Blockes 10 durchsetzt und mit ihrem freien Ende zumindest ein axiales ggfs. aber auch ein radiales Widerlager für das in der Lagerplatte 18 aufgenommene Kupplungsstück der Schneckenkupplung 15 bildet.

Mit Hilfe des als hydraulische Kolben-Zylinder-Einheit ausgelegten Vorschubantriebs 19, nämlich über den Kolben 20 und die Kolbenstange 21 läßt sich die Lagerplatte 18 sowie die hiervon getragene Antriebseinheit 16 mit dem Antriebsmotor 17 entlang der ortsfesten Führungsstangen 9 zwecks Hervorbringens der Einspritzbewegung der Schnecke verschieben. Die axialen bzw. radialen Kräfte, welche bei der Einspritzbewegung auftreten, werden hydrostatisch direkt im Einspritzzylinder 11 des Vorschubantriebs 19 aufgenommen. Die radiale Lagerung des Kupplungsstücks der Schneckenkupplung 15 und ggfs. auch der Kolbenstange 21 kann einfach vorzugsweise mit Hilfe von Gleitlagern, erreicht werden.

Besonders bewährt hat es sich, wenn das Kupplungsstück der Schneckenkupplung 15 gleichzeitig die Kolbenstange 21 des Vorschubantriebes 19 bildet.

Da die Antriebseinheit 16 mit dem Antriebsmotor 17 und der Lagerplatte 18 für die Dosierbewegung der Schnecke während der Einspritzbewegung der Schnecke mit bewegt wird, kann der Gesamtaufbau des Spritzaggregates 1 relativ einfach gestaltet bzw. aufgebaut werden.

### Liste der Bezugszeichen

- 1: Spritzaggregat
- 2: Plastifiziereinheit
- 3: Schneckenzylinder
- 4: Heizbänder
- 5: Düse
- 6: Heizband
- 7: Massetrichter
- 8: Aufnahme
- 9: Führungsstange
- 10: Block
- 11: Einspritzzylinder
- 12: Kolbenstange
- 13: Deckel
- 14: Schneckenwelle
- 15: Schneckenkupplung
- 16: Antriebseinheit
- 17: Antriebsmotor
- 18: Lagerplatte
- 19: Vorschubantrieb
- 20: Kolben
- 21: Kolbenstange
- 20/21/11: Kolben-Zylinder-Einheit

## Patentansprüche

1. Spritzaggregat für Spritzmaschinen zur Verarbeitung von Thermoplasten und Duroplast-, Elastomer- und Silikonkunststoffen,
- bei welchem die Plastifiziereinheit eine in einem Schneckenzylinder angeordnete sowie für die Dosierbewegung drehantreibbare Schnecke aufweist,
- und bei welchem die axiale Einspritzbewegung dieser Schnecke relativ zum Schneckenzylinder durch einen am hinteren Ende der Schnecke angreifenden Vorschubantrieb hervorbringbar ist,
**dadurch gekennzeichnet,**
- daß der Dosierantrieb (16, 17) für die Schnecke bzw. Schneckenwelle (14) ein an dieser angreifendes Kupplungsstück (Schneckenkupplung 15) umfaßt,
- daß dieses Kupplungsstück (Schneckenkupplung 15) sein axiales und ggfs. auch sein radiales Widerlager am Vorschubantrieb (19) hat,
- daß dieser Vorschubantrieb (19) aus einer hydraulischen Kolben-Zylinder-Einheit (20, 21, 11) besteht, deren Kolbenstange (21) die Abstützung des Kupplungsstücks (Schneckenkupplung 15) bildet,
- und daß der Kolben (20) diese Kolben-Zylinder-Einheit (20, 21, 11) hydrostatisch im Einspritzzylinder (11) derselben abgestützt ist.

2. Spritzaggregat nach Anspruch 1,
**dadurch gekennzeichnet,**
daß der Dosierantrieb (16, 17) an einer von Führungsstangen (9) getragenen, verschiebbaren Lagerplatte (18) angeordnet ist, an der der Vorschubantrieb (19) angreift.

3. Spritzaggregat nach einem der Ansprüche 1 und 2,
**dadurch gekennzeichnet,**
daß die Führungsstangen (9) zwischen einem sowohl den Vorschubantrieb (19) für die Dosierbewegung der Schnecke (Schneckenwelle 15) als auch die Düsenfahrzylinder der Plastifiziereinheit (2) enthaltenden Antriebsblock (10) und einer Aufnahme (8) für den Schneckenzylinder (3) der Plastifiziereinheit (2) angeordnet sind.

4. Spritzaggregat nach einem der Ansprüche 1 bis 3,
**dadurch gekennzeichnet,**
daß der Antriebsmotor (17) über eine als Zahnriementrieb ausgelegte Antriebseinheit (16) am Kupplungsstück der Schneckenkupplung (15) angreift.

5. Spritzaggregat nach einem der Ansprüche 1 bis 4,
**dadurch gekennzeichnet,**
daß der Antriebsmotor (17) des Dosierantriebs (16, 17) über ein Stirnradgetriebe am Kupplungsstück der Schneckenkupplung (15) angreift.

6. Spritzaggregat nach einem der Ansprüche 1 bis 5,
**dadurch gekennzeichnet,**
daß der Antriebsmotor (17) des Dosierantriebs ein Elektromotor oder ein Hyraulikmotor ist.

7. Spritzaggregat nach Anspruch 6,
**dadurch gekennzeichnet,**
daß dem als Elektromotor ausgelegtem Antriebsmotor (17) als Drehzahlregelung ein Frequenzumformer zugeordnet ist.
